# EUROPÄISCHE PATENTSCHRIFT

(11) **EP 1 366 947 B1**
(45) Veröffentlichungstag und Bekanntmachung des Hinweises auf die Patenterteilung: **21.07.2010**
(21) Anmeldenummer: 03009113.6
(22) Anmeldetag: 19.04.2003
(51) Int. Cl.: B60L 5/32

(54) **Vorrichtung zur Schnellabsenkung eines Stromabnehmers**
Device for quick retraction of current collector
Dispositif de descente rapide d'une prise de courant

(30) Priorität: 27.05.2002 DE 10223604
(43) Veröffentlichungstag der Anmeldung: 03.12.2003
(73) Patentinhaber: Stemmann-Technik GmbH, 48465 Schüttorf (DE)
(72) Erfinder: Wilpsbäumer Ulrich, Dipl.Ing., 48356 Nordwalde (DE)
(74) Vertreter: Griepenstroh, Jörg

(56) Entgegenhaltungen:
- EP-A- 0 384 972
- DE-A- 3 926 109
- DE-A- 19 529 070
- FR-A- 2 680 143

## Beschreibung

Die Erfindung betrifft eine Vorrichtung zur Schnellabsenkung eines Stromabnehmers. Eine Schnellabsenkung wird einem Stromabnehmer zugeordnet, um bei Störungen diverser Art Schäden an dem Stromabnehmer und/oder an einem Fahrdraht zu vermeiden. Vorrichtungen zur Schnellabsenkung sind durch die EP 0 042 334 B1, durch die EP 0 311 048 A1, durch das DE-GM 93 09 835 sowie durch die AT-PS'n 168.702 und 297.798 bekannt.

Der Erfindung liegt - ausgehend vom Stand der Technik - die Aufgabe zugrunde, eine Vorrichtung zur Schnellabsenkung eines Stromabnehmers zu schaffen, welche höhenunabhängig wirksam ist, ohne Verzögerungen bei einer Unregelmäßigkeit in der Zusammenarbeit zwischen einer Schleifleiste am Stromabnehmer und einem Fahrdraht anspricht und auch problemlos bei im Einsatz befindlichen Stromabnehmern nachgerüstet werden kann.

Diese Aufgabe wird mit den im Patentanspruch 1 angegebenen Merkmalen gelöst.

Wichtig an der Erfindung ist der Sachverhalt, dass jetzt unmittelbar im Bereich einer Wippe eines Stromabnehmers ein auf die Relativbewegungen der Wippe zum Fahrdraht ansprechender und mit einer Schnellabsenkeinheit gekoppelter Sensor vorgesehen ist. Die unmittelbare Zuordnung eines Sensors zur Wippe gewährleistet, dass jede Bewegung der Wippe, die das vorgesehene betriebsbedingte Maß relativ zum Fahrdraht überschreitet, beispielsweise beim Kontakt der Wippe mit einem auf einem Fahrdraht liegenden Gegenstand, sofort zu einem Ansprechen der Schnellabsenkeinheit führt und damit Schäden am Stromabnehmer und/oder am Fahrdraht weitgehend vermeidet.

Da in der Regel ein Stromabnehmer mit einer zwei Schleifleisten aufweisenden Wippe ausgerüstet ist, erscheint es erfindungsgemäß sinnvoll, dass jeder Schleifleiste ein Sensor zugeordnet ist, der auf beide Fahrtrichtungen des jeweiligen Triebfahrzeugs anspricht.

Der Sensor kann mechanischer, pneumatischer, hydraulischer oder elektrischer Natur sein. Auch die mit dem Sensor gekoppelte Schnellabsenkeinheit kann auf mechanischer, pneumatischer, hydraulischer oder elektrischer Basis beruhen.

Eine Ausführungsform der Erfindung ist im Patentanspruch 2 gekennzeichnet. Danach umfasst der Sensor eine mit Druckluft beaufschlagte Kammer in einer Halterung der Schleifleiste und mindestens eine Wand der Kammer ist als Sollbruchstelle ausgebildet.

Diese Ausführungsform kann insbesondere dann zum Einsatz gelangen, wenn eine Schleifleiste aus einem Sintermetall und nicht aus einem herkömmlichen spröden Kohlenstoffwerkstoff besteht. Wird jetzt die Halterung der Schleifleiste über das vorgesehene Maß der Relativbewegung der Wippe zum Fahrdraht hinaus verlagert (verschwenkt), reißt die Sollbruchstelle und die in der Kammer anstehende Druckluft kann schlagartig entweichen, so dass die Schnellabsenkung durchgeführt wird.

Da jede Schleifleiste in der Regel über zwei Halterungen an der Wippe abgestützt ist, wird auch jeder Halterung ein Sensor zugeordnet, d.h. jede Halterung ist mit einer druckluftbeaufschlagten Kammer ausgerüstet.

Die Erfindung kann auch als zusätzliche Sicherungseinrichtung eingesetzt werden und zwar bei einem solchen Stromabnehmer, dessen Schleifleisten aus herkömmlichen Kohlenstoffmaterialien bestehen und die jeweils einen Luftkanal beinhalten, der mit Druckluft beaufschlagt ist. In einem solchen Fall könnte selbst bei einem langsam fahrenden Triebfahrzeug auch ohne Bruch der Kohleschleifleiste eine Auslösung der Schnellabsenkeinheit erreicht werden, wenn eine solche Relativbewegung der Wippe zum Fahrdraht erfolgt, die unzulässig groß ist.

Die Erfindung ist nachfolgend anhand eines in den Zeichnungen veranschaulichten Ausführungsbeispiels näher erläutert. Es zeigen:
- Figur 1: in der Seitenansicht im Schema einen Einholm-Stromabnehmer mit Kompaktantrieb;
- Figur 2: in detaillierter Darstellung den Ausschnitt II der Figur 1 und
- Figur 3: eine Teilansicht auf die Darstellung der Figur 2 in Richtung des Pfeils III gesehen.

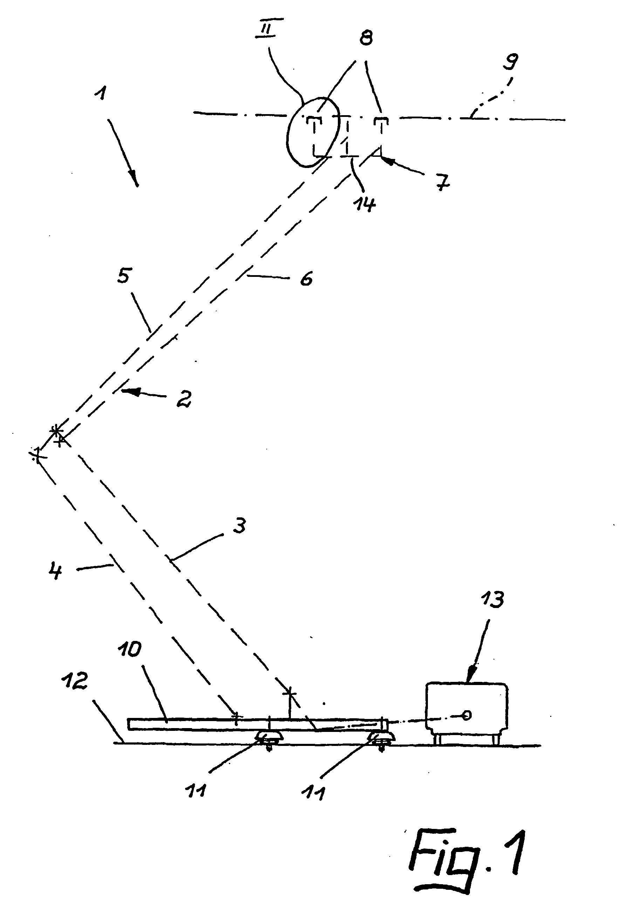

Mit 1 ist in der Figur 1 allgemein ein Einholm-Stromabnehmer bezeichnet. Sein Stromabnehmer-Gestell 2 setzt sich aus einem Gestell-Unterholm 3 mit Kuppelstange 4 sowie einem Gestell-Oberholm 5 mit Parallelführungsstange 6 zusammen. Am oberen Ende des Gestell-Oberholms 5 und der Parallelführungsstange 6 ist eine Wippe 7 mit Schleifleisten 8 schwenkbar gelagert, die an einem in strichpunktierter Linienführung angedeuteten Fahrdraht 9 zur Anlage gelangen.

Der Gestell-Unterholm 3 ist vertikal schwenkbar an einem Grundrahmen 10 befestigt, der über Isolatoren 11 auf einem Fahrzeugdach 12 eines nicht näher veranschaulichten Triebfahrzeugs festgelegt ist. Auf die Kupplstange 4 ist zwischen dem Grundrahmen 10 und dem Gestell-Oberholm 5 schwenkbar eingegliedert.

Mit 13 ist eine Schnellsenkeinheit bezeichnet, die in nicht näher veranschaulichter Weise mit dem Stromabnehmer-Gestell 2 verbunden ist.

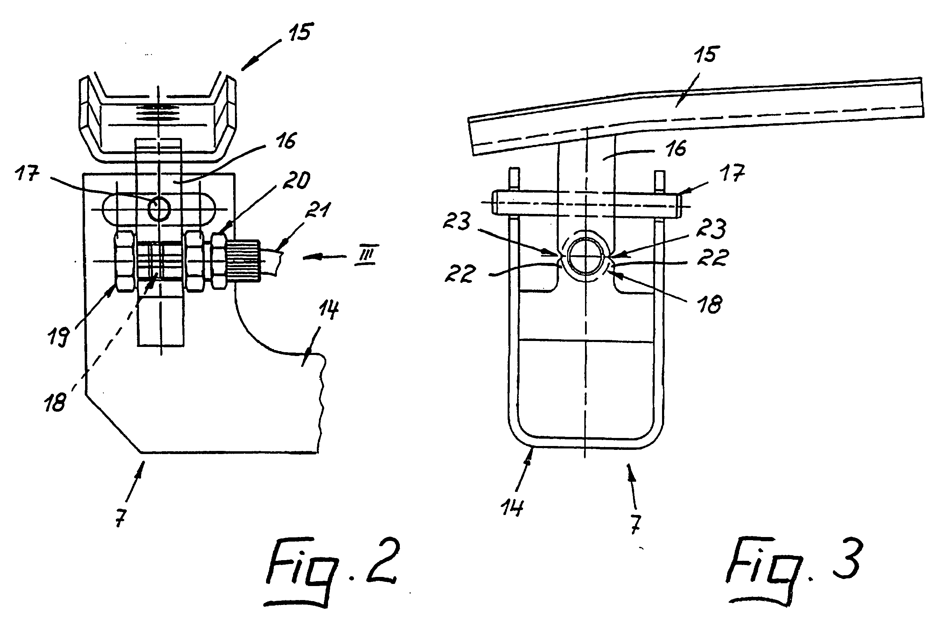

Wie die Figuren 2 und 3 näher erkennen lassen, besitzt die Wippe 7 einen sowohl im Querschnitt als auch in der Seitenansicht U-förmig konfigurierten Wippentragholm 15 zur Lagerung der Schleifleiste 8.

Die Aufnahmen 15 für die in den Figuren 2 und 3 nicht näher dargestellten Schleifleisten 8 sind endseitig mit stützenartigen Halterungen 16 versehen. Die Halterungen 16 sind T-förmig gestaltet und im Wippentragholm 14 befestigt. Ein Sicherungsbolzen 17 durchsetzt den Wippentragholm 14 und die Halterungen 16.

In jeder Halterung 16 ist ein Sensor 18 in Form einer mit Druckluft beaufschlagbaren Kammer vorgesehen. Der Sensor 18 wird als Gewindebohrung ausgeführt und endseitig einerseits durch eine Dichtschraube 19 und andererseits durch eine Schlauchverschraubung 20 als Bestandteil eines Druckluftschlauchs 21 abgedichtet. Die Wandabschnitte 22 neben dem Sensor 18 sind mit Sollbruchstellen 23 in Form von Einkerbungen versehen.

Gelangt eine der Schleifleisten 8 in Kontakt mit einem auf dem Fahrdraht 9 befindlichen Hindernis, so kann die Wippe 7 zunächst in einem vorbestimmten Umfang federnd elastisch ausweichen. Wird das Maß dieser Ausweichbewegung überschritten, erfolgt in einer entsprechenden Crashsituation eine Verlagerung der entsprechenden Halterung 16 relativ zum Wippentragholm 14, so dass der Sensor 18 im Bereich der Sollbruchstellen 23 geöffnet wird und sich die anstehende Druckluft entspannen kann. Dies führt dazu, dass über die mit dem Sensor 18 gekoppelte Schnellsenkeinheit 13 der Stromabnehmer 1 schlagartig zum Fahrdraht 9 wegbewegt wird. Weitere Beschädigungen des Stromabnehmers 1 und/oder des Fahrdrahts 9 werden dadurch unterbunden.

### Bezugszeichenaufstellung:

- 1 -: Stromabnehmer
- 2 -: Gestell von 1
- 3 -: Unterholm von 2
- 4 -: Kuppelstange von 2
- 5 -: Oberholm
- 6 -: Parallelführungssstange
- 7 -: Wippe
- 8 -: Schleifleisten
- 9 -: Fahrdraht
- 10 -: Grundrahmen
- 11 -: Isolatoren
- 12 -: Fahrzeugdach
- 13 -: Schnellsenkeinheit
- 14 -: Wippentragholm
- 15 -: Aufnahmen für 8
- 16 -: Halterungen für 15
- 17 -: Sicherungsbolzen
- 18 -: Sensor
- 19 -: Dichtschraube
- 20 -: Schlauchverschraubung
- 21 -: Druckluftschlauch
- 22 -: Wandabschnitte
- 23 -: Sollbruchstellen

## Patentansprüche

1. Vorrichtung zur Schnellabsenkung eines Stromabnehmers (1), bei welcher im Bereich einer mit wenigstens einer Schleifleiste (8) versehenen Wippe (7) des Stromabnehmers (1) ein auf die Relativbewegungen der Wippe (7) zum Fahrdraht (9) ansprechender und mit einer Schnellabsenkeinheit (13) gekoppelter Sensor (18) vorgesehen ist.

2. Vorrichtung nach Patentanspruch 1, bei welcher der Sensor (18) eine mit Druckluft beaufschlagte Kammer in einer Halterung (16) der Schleifleiste (8) umfasst und mindestens eine Wand (22) des Sensors (18) mit einer Sollbruchstelle (23) versehen ist.

## Claims

1. Device for rapid-lowering (ADD) of a pantograph (1), in which, in the area of a contact head (7) of the pantograph (1), said contact head having at least one contact strip (8), a sensor (18) is provided which responds to the movements of the contact head (7) relative to the catenary wire (9) and said sensor is coupled with a rapid-lowering unit (ADD) (13).

2. Device according to claim 1, in which the sensor (18) comprises a chamber, which is acted upon by compressed air, in a holder (16) of the contact strip (8), and at least one wall (22) of the sensor (18) is provided with a target break point (23).

## Revendications

1. Dispositif pour faire descendre rapidement un collecteur de courant (1), dans lequel, dans la région d'une bascule (7), pourvue d'au moins une barrette de frottement (8), du collecteur de courant (1), il est prévu un capteur (18) qui réagit au mouvement relatif de la bascule (7) par rapport au fil de caténaire (9) et qui est accouplé à une unité de descente rapide (13).

2. Dispositif selon la revendication 1, dans lequel le capteur (18) comprend une chambre, alimentée en air comprimé, dans une monture (16) de la barrette de frottement (8), et au moins une paroi (22) du capteur (18) est pourvue d'un emplacement de rupture de consigne (23).
